# EUROPÄISCHE PATENTSCHRIFT

(11) **EP 2 306 135 B1**
(45) Veröffentlichungstag und Bekanntmachung des Hinweises auf die Patenterteilung: **07.11.2018**
(21) Anmeldenummer: 09012217.7
(22) Anmeldetag: 25.09.2009
(51) Int. Cl.: F28F 3/12, F28F 21/02, B32B 5/18, B32B 27/04, C04B 35/536, F24D 3/16

(54) **Grafitplatte**
Graphite plate
Plaque de graphite

(43) Veröffentlichungstag der Anmeldung: 06.04.2011
(73) Patentinhaber: Zehnder Group International AG, 5722 Gränichen (CH)
(72) Erfinder: Weschle, Hans-Peter, 77743 Neuried (DE)
(74) Vertreter: Rausch Wanischeck-Bergmann Brinkmann

(56) Entgegenhaltungen:
- EP-A1- 0 445 400
- EP-A1- 0 515 891
- DE-A1-102008 019 888
- JP-A- 63 098 965
- US-A1- 2003 175 201

## Beschreibung

Die vorliegende Erfindung betrifft ein Plattenelement, hergestellt durch Verpressung von expandiertem Grafit nach dem Oberbegriff des Anspruchs 1. JP 63098965 offenbart ein derartiges Plattenelement.

Derartige Plattenelemente sind im Stand der Technik bekannt. Es ist bekannt, dass bestimmte Grafitarten, vorliegend in kleinen Plättchen, durch Hitzeeinwirkung expandiert werden können, wobei sich ein Vielfaches des Volumens ergibt. Die sich ergebenden expandierten Elemente sind Fäden von wurmartiger Struktur. Beim Aufbringen von Druckkraft richten sich diese expandierten Grafitfäden im Wesentlichen senkrecht zur Krafteinwirkung aus und verhaken sich ineinander. Die sich ergebenden Platten werden als Grafitschaumplatten bezeichnet.

Ein Nachteil der vorbekannten Platten ist ihr Mangel an mechanischer Beständigkeit. Der Verbund zwischen den Grafitelementen ist nur sehr lose. Die Platten brechen bei mechanischer Einwirkung sehr leicht und sind insbesondere nicht selbsttragend.

Es ist bereits vorgeschlagen worden, die Platten beispielsweise mit zugfesten Schichten an den Oberflächen zu versehen oder diese in Metallrahmen einzusetzen, um sie handhabbar zu machen.

So ist beispielsweise aus der JP 63098965A ein Plattenelement aus verpresstem, expandiertem Grafit (50) bekannt, bei dem das Grafit insbesondere mit Phenolharz strukturell verstärkt werden kann.

Ausgehend vom vorbeschriebenen Stand der Technik liegt der vorliegenden Erfindung die **Aufgabe** zugrunde, Grafitplatten des vorbekannten Typs dahingehend zu verbessern, dass sie mechanisch belastbarer sind.

Zur technischen **Lösung** dieser Aufgabe wird eine Grafitschaumplatte mit den Merkmalen des Patentanspruches 1 vorgeschlagen. Weitere Vorteile und Merkmale ergeben sich aus den Unteransprüchen.

Grundsätzlich ist es denkbar, die Grafitelemente nach ihrer Expansion und vor dem Pressen beispielsweise mit anderen Komponenten zu vermischen, die später mechanische Festigkeitseigenschaften bewirken. Dabei kann es sich beispielsweise um Kunststoffgranulat handeln, Ein- oder Mehrkomponentenwerkstoffe, verschmelzbare Fäden und dergleichen. Nach dem Verpressen der Platte und ggf. nach weiteren Bearbeitungsschritten wie Einfräsen von Leitungsbahnen und dergleichen, Einpressen von Konturen usw. können die eingemischten Elemente beispielsweise aktiviert werden.

So können temperaturaktivierbare Kunststoffe oder Kleber eingebracht sein, Schmelzfäden aus Kunststoffen, die bei Temperatur- und/oder Druckeinwirkung miteinander verkleben oder vernetzen und dergleichen. Der Einfluss von Temperatur, Druck oder anderen Parametern aktiviert die eingemischten Komponenten, so dass diese sich verweben, verfilzen, vernetzen oder sonstwie verbinden. Die Gesamtstruktur aus eingebrachten strukturverstärkenden Elementen einerseits und Grafit bzw. expandiertem Grafit andererseits bringt eine Platte hervor, die nicht nur die positiven Eigenschaften der Grafitschaumplatte aufweist, wobei insbesondere die gute Leitfähigkeit und Vergleichmäßigung von Wärme oder allgemeinen Temperatur zu zählen ist, sondern die Platte ist mechanisch weitgehend eigenständig und vor allem handhabbar.

Die Vernetzung kann soweit gehen, dass die Platte selbsttragend ist und beispielsweise ohne metallische Tragrahmen oder dergleichen Kassetten, beispielsweise als Deckenheizfläche einsetzbar ist.

Des Weiteren können die erfindungsgemäßen Plattenelemente als strukturverstärkende Elemente Fasern wie beispielsweise Kunststofffasern, Glasfasern, oder auch Naturfasern wie beispielsweise Kokosfasern oder Hanffasern enthalten. Diese Fasern können auch zusammen mit geeigneten Klebstoffen wie beispielsweise synthetischen oder natürlichen Harzen, oder den zuvor beschriebenen Kunststoffgranulaten in die Plattenelemente eingebracht sein.

In einer Ausgestaltung der Erfindung ist es vorgesehen, dass die strukturverstärkenden Elemente in den Randbereich der Plattenelemente eingebracht sind. Dies kann beispielsweise durch Tauchen der Platte in geeignete Lösungen erfolgen, welche strukturverstärkende Elemente in fließfähiger oder flüssiger Form enthalten, die dann nach Eindringen in den Randbereich der Platte unter Ausbildung verfestigter Strukturen aushärten.

Geeignete strukturverstärkende Elemente für eine solche Art der Einbringung sind beispielsweise monomere oder polymere Verbindungen, insbesondere auf Basis von Alkydharzen und/oder (Meth)Acrylatharzen.

Um eine weitere Stabilisierung der Plattenelemente zu erreichen, ist es gemäß der Erfindung vorgesehen sein, dass die Platte Bohrungen aufweist, über welche die strukturverstärkenden Elemente in die Platte eingebracht sind. Solche Bohrungen können beispielweise Durchbohrungen, Sackbohrungen und/oder Kegelbohrungen sein.

Hierdurch ist es möglich, dass in flüssiger bzw. fließfähiger Form vorliegende strukturverstärkende Elemente nicht nur in den Randbereich der Platte eindringen können, sondern über die Bohrungen auch in unterschiedlichen Bereichen des Plattenelementes nach Aushärtung verfestigte Strukturen ausbilden.

Unter Bohrungen im Sinne der Erfindung sind allgemein Löcher in dem Plattenelement zu verstehen, so dass auch Ausstanzungen oder dergleichen von dem hier verwendeten Begriff umfasst sein sollen. So kann es beispielsweise auch vorgesehen sein, dass die Bohrungen unterschiedliche Formen aufweisen und neben einer runden auch eine eckige oder sternartige Form aufweisen können, wodurch zum einen größere Innenoberflächen der Bohrungen erreicht werden können, zum anderen eine verbesserte Statik erreicht werden kann.

Die Bohrungen können in allen Richtungen relativ zu den Oberflächen der Plattenelemente verlaufen, so dass beispielsweise rechtwinklig zu den großen Oberflächen der Plattenelemente angeordnete Bohrungen, rechtwinklig zu den Seitenflächen der Plattenelemente angeordnete Bohrungen, oder auch winklig zu den großen Oberflächen oder Seitenflächen der Plattenelemente angeordnete Bohrungen vorgesehen sein können. Ziel der Bohrungen ist es, eine möglichst homogene Ausbildung der verfestigten Strukturen innerhalb des Plattenelementes zu erreichen.

Hierbei können die Bohrungsabstände und Bohrungsgrößen in weiten Bereichen variiert werden. So sind beispielsweise Bohrungsabstände zwischen 1 mm und 100 mm, vorzugsweise zwischen 1 mm und 30 mm möglich. In Abhängigkeit der Bohrungsabstände können die Bohrungsgrößen in einem Bereich zwischen 0,05 mm und 30 mm, vorzugsweise 0,05 mm und 10 mm variiert werden.

Zur Einbringung der strukturverfestigenden Elemente in ein solches gebohrtes bzw. perforiertes Plattenelement aus verpressten, expandierten Grafit kann es erfindungsgemäß vorgesehen sein, das Plattenelement mit einer Dispersion zu kontaktieren, welche beispielsweise polymere Verbindungen auf Basis von Alkydharzen und/oder (Meth)Acrylatharzen aufweist. Kontaktieren im erfindungsgemäßen Sinne bedeutet dabei, dass die Platte in eine solche Dispersion getaucht wird oder beispielsweise mit einer solchen Dispersion besprüht wird, jeweils mit der Maßgabe, dass die Dispersion in hinreichender Weise in die Randbereiche des Plattenelementes bzw. in die Bohrungen eindringen kann. Um ein Eindringen der Dispersion insbesondere in die Bohrungen zu erleichten kann es erfindungsgemäß vorgesehen sein, das Plattenelement unter Vakuum oder zumindest deutlich verringertem Außendruck mit der Dispersion zu kontaktieren.

Weitere Vorteile und Merkmale der Erfindung ergeben sich aus der folgenden Beschreibung anhand der Figuren.
- Fig. 1:: zeigt ein erfindungsgemäßes Plattenelement.
- Fig. 2:: zeigt ein erfindungsgemäßes Plattenelement, bei welchem ein statischer Obergurt mit einem statischen Untergurt über die in das Plattenelement eingebrachten Bohrungen verbunden ist.
- Fig. 3:: zeigt eine Aufsicht auf ein erfindungsgemäßes Plattenelement.

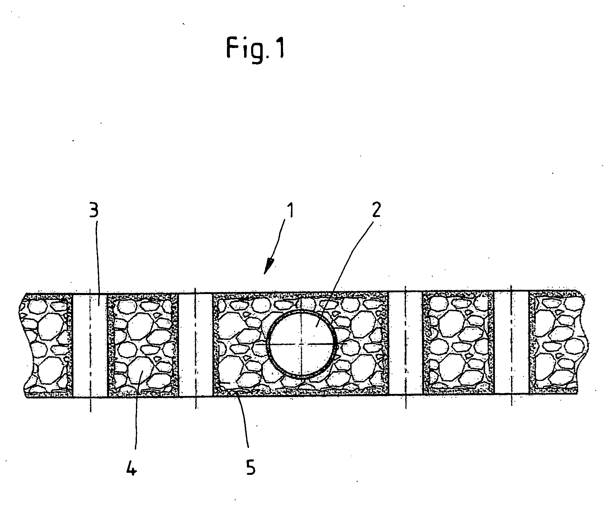

Fig. 1 zeigt ein erfindungsgemäßes Plattenelement 1 aus verpressten, expandierten Grafit, welches zur Verwendung als Wärmetauscherelement, also als Heiz- oder Kühlelement, ein Rohr 2 aufweist, durch welches ein geeignetes Heiz- oder Kühlmedium geführt werden kann. Das Rohr 2 kann je nach geplanter Verwendung ein Kupferrohr, Kunststoffrohr oder auch Stahlrohr sein. Das Plattenelement 1 weist Bohrungen 3 auf, welche von der einen großen Oberfläche des Plattenelementes zur anderen großen Oberfläche des Plattenelementes reichen. Bei Kontaktieren des Plattenelementes mit einer geeigneten Polymerdispersion dringt diese in die Randbereiche der Platte sowie die Wandungen der Bohrungen ein und bildet in den eingedrungenen Bereichen nach Aushärtung verfestigte Strukturen 5, während die nicht von der Polymerdispersion durchdrungenen Bereiche 4 weiterhin unverfestigte Strukturen aufweisen. Eine geeignete Polymerdispersion ist beispielsweise eine wässrige Acrylharzdispersion, wie sie auch als Tiefengrund zur Behandlung von saugfähigen Oberflächen eingesetzt wird.

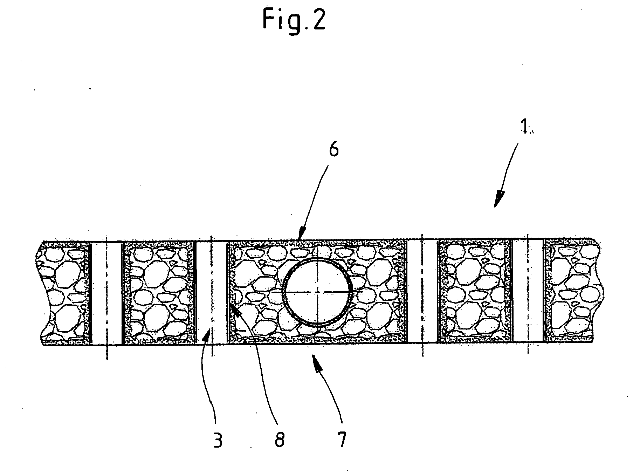

Fig. 2 zeigt ebenfalls ein erfindungsgemäßes Plattenelement zur Verwendung als Wärmetauscher, welches jedoch zusätzlich zu den verfestigten Strukturen einen statischen Obergurt 6 und einen statischen Untergurt 7 aufweist. Obergurt 6 und Untergurt 7 können dabei beispielsweise unabhängig voneinander Metall- oder Kunststoffplatten sein, oder auch andere Trägerelemente wie beispielsweise Gipskartonplatten. Über die Bohrungen 3, welche zuvor durch Einbringen einer Polymerdispersion stabilisiert wurden, können dann zwischen Obergurt 6 und Untergurt 7 Verbindungselemente 8 eingebracht werden, die den Obergurt 6 mit dem Untergurt 7 verbinden. Geeignete Verbindungen sind beispielsweise Hülsen, Schrauben oder Stifte. Hierdurch ergibt sich ein stabiler Träger mit verfestigten Strukturbereichen und einem guten mechanischen Zusammenhalt zwischen Obergurt 6 und Untergurt 7.

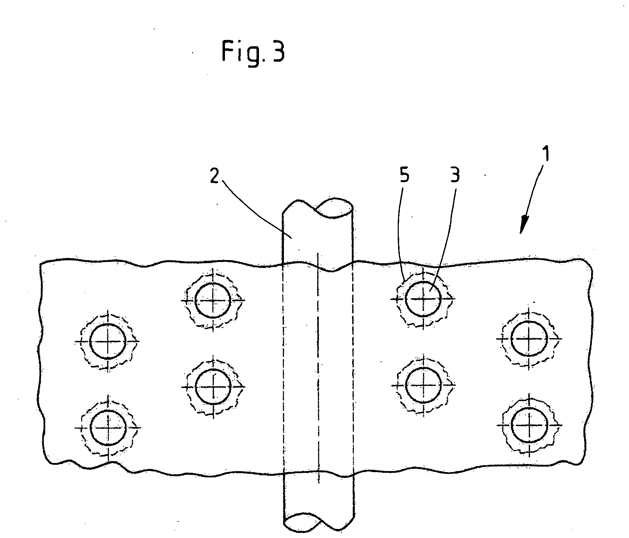

Fig. 3 zeigt eine Aufsicht auf ein erfindungsgemäßes Plattenelement 1 mit einem darin integrierten Rohr 2. Die Bohrungen 3 sind in dem gezeigten Ausführungsbeispiel in regelmäßigen Abständen zueinander angeordnet. Um die Bohrungen herum ergeben sich über den Plattenquerschnitt nach Einbringen einer geeigneten Polymerdispersion und deren Aushärtung verfestigte Bereiche 5, welche zu einer Stabilisierung der Plattenstruktur beitragen.

### Bezugszeichenliste

- 1: Plattenelement
- 2: Rohr
- 3: Bohrung
- 4: unverfestigter Bereich
- 5: verfestigter Bereich
- 6: Obergurt
- 7: Untergurt
- 8: Verbindung zwischen Ober- und Untergurt

## Patentansprüche

1. Plattenelement aus verpresstem, expandiertem Grafit, wobei das Plattenelement strukturverstärkende Elemente aufweist,
**dadurch gekennzeichnet,**
**dass** das Plattenelement Bohrungen aufweist, über welche die strukturverstärkenden Elemente in das Plattenelement eingebracht sind.

2. Plattenelement nach Anspruch 1, wobei die strukturverstärkenden Elemente Fasern, Kunststoff-Monomere oder -Polymere, und/oder Klebstoffe sind.

3. Plattenelement nach Anspruch 1 oder 2, wobei die strukturverstärkenden Elemente im Randbereich des Plattenelements eingebracht sind.

4. Plattenelement nach einem der vorhergehenden Ansprüche, wobei die Bohrungen Durchbohrungen, Sackbohrungen und/oder Kegelbohrungen sind.

5. Plattenelement nach einem der vorhergehenden Ansprüche, wobei die strukturverstärkenden Elemente als unter Ausbildung verfestigter Strukturen aushärtende flüssige oder zumindest fließfähige Elemente ausgebildet sind.

6. Plattenelement nach Anspruch 5, wobei die strukturverstärkenden Elemente polymere Verbindungen sind, insbesondere auf Basis von Alkydharzen und/oder (Meth) Acrylatharzen.

7. Plattenelement nach einem der vorhergehenden Ansprüche, **dadurch gekennzeichnet, dass** das Plattenelement einen Obergurt und einen Untergurt aufweist.

8. Plattenelement nach Anspruch 7, **dadurch gekennzeichnet, dass** der Obergurt und der Untergurt mittels in den Bohrungen, welche durch Einbringen einer Polymerdispersion stabilisiert sind, angeordneten Verbindungselementen verbunden sind.

9. Verwendung eines Plattenelements nach einem der vorhergehenden Ansprüche als Teil eines Deckenelementes zum Heizen und/oder Kühlen.

10. Verfahren zur Herstellung eines Plattenelementes, wobei expandiertes Grafit in Form eines Plattenelementes verpresst wird, wobei wenigstens in die äußeren Randbereiche des Plattenelementes strukturverstärkende Elemente eingebracht werden, **dadurch gekennzeichnet, dass** in das Plattenelement Bohrungen eingebracht werden, über welche die strukturverstärkenden Elemente in das Plattenelement eingebracht werden.

11. Verfahren nach Anspruch 10, wobei als strukturverstärkende Elemente Fasern, Kunststoff-Monomere oder -Polymere, und/oder Klebstoffe eingebracht werden, insbesondere polymere Verbindungen auf Basis von Alkydharzen und/oder (Meth) Acrylatharzen.

## Claims

1. A plate element made of pressed expanded graphite, wherein the plate element comprises structure enhancing elements,
**characterized in**
**that** the plate element comprises bores, via which the structure enhancing elements have been inserted into the plate element.

2. A plate element according to claim 1, wherein the structure enhancing elements are fibres, plastic monomers or polymers and/or adhesives.

3. A plate element according to claim 1 or 2, wherein the structure enhancing elements are introduced into the edge region of the plate element.

4. A plate element according to one of the preceding claims, wherein the bores are through bores, blind holes and/or taper bores.

5. A plate element according to one of the preceding claims, wherein the structure enhancing elements are configured as liquid or at least flowable elements which harden while forming solidified structures.

6. A plate element according to claim 5, wherein the structure enhancing elements are polymeric compounds, in particular on the base of alkyd resins and/or (meth) acrylate resins.

7. A plate element according to one of the preceding claims, **characterized in that** the plate element comprises an upper belt and a lower belt.

8. A plate element according to claim 7, **characterized in that** the upper belt and the lower belt are connected by means of connecting elements arranged in the bores which are stabilized by introduction of a polymeric dispersion.

9. A use of a plate element according to one of the preceding claims, as part of a ceiling element for heating and/or cooling.

10. A method for manufacturing a plate element, wherein expanded graphite will be pressed into the shape of a plate element and structure enhancing elements will be inserted at least into the outer edge regions of the plate element, **characterized in that** bores are formed in the plate element, via which bores the structure enhancing elements are introduced into the plate element.

11. A method according to claim 10, wherein fibres, plastic monomers or polymers and/or adhesives, in particular polymeric compounds on the base of alkyd resins and/or (meth) acrylate resins, will be introduced as structure enhancing elements.

## Revendications

1. Elément de plaque en graphite expansé et comprimé, l'élément de plaque comprenant des éléments renforçant la structure,
**caractérisé en ce**
**que** l'élément de plaque comprend des trous de forage, via lesquels les éléments renforçant la structure sont introduits dans l'élément de plaque.

2. Elément de plaque selon la revendication 1, dans lequel les éléments renforçant la structure sont des fibres, des monomères ou des polymères de matières synthétiques et/ou des adhésifs.

3. Elément de plaque selon la revendication 1 ou la revendication 2, dans lequel les éléments renforçant la structure sont introduits dans la zone du bord de l'élément de plaque.

4. Elément de plaque selon l'une des revendications précédentes, dans lequel les trous de forage sont des alésages de passage, des trous borgnes et/ou des alésages coniques.

5. Elément de plaque selon l'une des revendications précédentes, dans lequel les éléments renforçant la structure sont configurés comme des éléments liquides ou au moins fluides, qui durcissent en formant des structures solidifiées.

6. Elément de plaque selon la revendication 5, dans lequel les éléments renforçant la structure sont des composés polymères, notamment sur la base de résines alkyde et/ou de résines (méth) acrylate.

7. Elément de plaque selon l'une des revendications précédentes, **caractérisé en ce que** l'élément de plaque comprend une bride supérieure et une bride inférieure.

8. Elément de plaque selon la revendication 7, **caractérisé en ce que** la bride supérieure et la bride inférieure sont reliées par moyen des éléments de liaison disposés dans les tous de forage, qui sont stabilisé par introduction d'une dispersion polymère.

9. Utilisation d'un élément de plaque selon l'une des revendications précédentes comme partie d'un élément de plafond destiné au chauffage et/ou au refroidissement.

10. Procédé de fabrication d'un élément de plaque, dans lequel on compresse du graphite expansé en forme d'un élément de plaque, et on introduit des éléments renforçant la structure dans les zones du bord extérieures de l'élément de plaque, **caractérisé en ce que** des trous de forage sont aménagés dans l'élément de plaque, via lesquels trous de forage les éléments renforçant la structure sont introduits dans l'élément de plaque.

11. Procédé selon la revendication 10, dans lequel on introduit des fibres, des monomères ou des polymères de matières synthétiques et/ou des adhésifs, notamment des composés polymères sur la base de résines alkyde et/ou de résines (méth) acrylate, comme des éléments renforçant la structure.
